(19) Europäisches Patentamt
European Patent Office
Office européen des brevets

(11) **EP 3 199 472 B1**

(12) **EUROPEAN PATENT SPECIFICATION**

(45) Date of publication and mention
of the grant of the patent:
**18.12.2019 Bulletin 2019/51**

(21) Application number: **15844223.6**

(22) Date of filing: **18.09.2015**

(51) Int Cl.:
***B65D 85/00*** *(2006.01)*   ***B65B 29/00*** *(2006.01)*
***B65D 77/00*** *(2006.01)*   ***B65D 77/04*** *(2006.01)*
***B65D 85/38*** *(2006.01)*

(86) International application number:
**PCT/JP2015/076623**

(87) International publication number:
**WO 2016/047574 (31.03.2016 Gazette 2016/13)**

(54) **METHOD OF PRODUCING POLYSILICON PACKAGE**

VERFAHREN ZUR HERSTELLUNG EINER POLYSILICIUMVERPACKUNG

PROCEDE DE PRODUCTION D'UN EMBALLAGE DE POLYSILICIUM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.09.2014 JP 2014196131**

(43) Date of publication of application:
**02.08.2017 Bulletin 2017/31**

(73) Proprietor: **Tokuyama Corporation
Shunan-shi, Yamaguchi-ken 745-8648 (JP)**

(72) Inventors:
• **YOSHIMURA, Satoko
Shunan-shi
Yamaguchi 745-8648 (JP)**

• **ASANO, Takuya
Shunan-shi
Yamaguchi 745-8648 (JP)**

(74) Representative: **J A Kemp LLP
14 South Square
Gray's Inn
London WC1R 5JJ (GB)**

(56) References cited:
**EP-A2- 2 740 687        DE-A1-102007 027 110
DE-A1-102012 206 251    JP-A- 2010 036 981
JP-A- 2010 528 955      JP-A- 2012 101 838
JP-A- 2014 108 829**

**Description**

TECHNICAL FIELD

The present invention relates to a process for producing a polysilicon package containing crushed polysilicon which are used as a raw material for the production of semiconductors.

BACKGROUND ART

High-purity polysilicon is produced mainly by a Siemens process and used as a raw material for the production of a silicon single crystal used as a raw material of a semiconductor device. The Siemens process is a process in which a high-purity silicon seed (core wire) is electrically heated to react a silane-based gas with hydrogen on the surface of the seed for the vapor-phase growth of a high-purity polysilicon rod.

The polysilicon rod produced by the above Siemens process may be crushed, packaged or packed in the form of crushed polysilicon (may also be referred to as "Si chunks" hereinafter) which are block pieces and transported to a single crystal polysilicon production plant, etc.

After the above Si chunks are optionally etched to remove impurities on the surface, they are filled in a polyethylene-based resin film bag to prevent their contamination. The bag filled with the Si chunks, that is, a polysilicon package is generally packed in a transport case such as a cardboard box to be transported.

By the way, for the above bag filled with the crushed polysilicon, there is pointed out a problem that a sharp edge of a Si chunk as the content breaks through the package bag with the result that polysilicon is contaminated by contact with air when it is transported.

To solve the above problem, there are proposed some measures.

For example, there is known a package for containing polysilicon blocks, which has a double structure consisting of an inner bag and an outer bag so that contamination can be prevented with the outer bag if the inner bag is broken (refer to Patent Document 1). The above double package is effective and widely used in the industry.

However, in the case of the above double-package, damage to the inner bag must be prevented. Damage to the inner bag may cause damage to the outer bag.

To prevent damage to the bag filled with crushed polysilicon, it is conceivable that the polyethylene-based resin film constituting the bag should be thick. However, there is limitation to the prevention of damage to the bag by thickness. That is, when the film is made too thick and an opening for filling is closed by heat-sealing after the crushed polysilicon are filled, thermal fusion by heat-sealing tends to become unsatisfactory, thereby deteriorating the sealability of the bag. In the case of a gusset bag in which a gusset is folded, the heat-sealability of a folded part becomes unsatisfactory with the result of the great deterioration of sealability. When a film forming the bag is too thick, the bag filled with the crushed polysilicon becomes bulky at the time of packing a transport case, thereby making efficient packing impossible.

Since only the control of the thickness of the bag causes another problem such as the deterioration of sealability or packing property, damage to the bag by the crushed polysilicon cannot be prevented effectively.

DE 10 2012 206251 A1 discloses a method for packing polycrystalline silicon chunks within at least one film which is surrounded by a further film having a reinforcing structure or by a shaping element.

Prior Art Document

Patent Document

Patent Document 1: Utility Model Registration No. 2561015

DISCLOSURE OF THE INVENTION

Problem To Be Solved by the Invention

It is therefore an object of the present invention to provide a process for producing a package in which a bag formed from a polyethylene-based resin film having a small thickness, more specifically a thickness of 300 $\mu$m or less is filled with Si chunks and damage to the bag by the chunks is effectively prevented.

Means for Solving the Problem

The inventors of the present invention conducted intensive studies to solve the above problem and found that when the bag is held in an upright state with a filling opening thereof facing up to fill Si chunks therein from the filling opening, Si chunks filled later are wedged into spaces between Si chunks filled before by strong force, for example, pressing force by human hands or force produced by acceleration of gravity when the Si chunks are mechanically dropped from above, whereby the wedged part of the film forming the bag is greatly expanded and a part made thinner by the expansion tends to be broken by the Si chunks. Based on this finding, damage to the bag can be prevented by controlling the means of filling the Si chunks in the bag so that this expansion is restricted, thereby accomplishing the present invention, which is defined by the claims.

According to the present disclosure, there is provided a polysilicon package in which a bag formed from a polyethylene-based resin film having an average thickness of 300 $\mu$m or less is filled with crushed polysilicon, wherein the bag has a heat-sealed bonded part at the bottom and filled with the crushed polysilicon to ensure that the maximum expansion of the bag becomes 5 % or less while it is held in an upright state with the bottom as a ground contact surface.

In the polysilicon package of the present disclosure, it is preferred that

(1) the ratio ($h/L_1$) of the loading height "h" of the crushed polysilicon filled in the bag to the inner peripheral length "$L_1$" of the bag before the crushed polysilicon are filled should be 0.1 or more;
(2) the average maximum length of the above crushed polysilicon should be 5 to 150 mm; and
(3) the polyethylene-based resin film forming the bag should have a thrust strength (JIS-Z1707) of 5 N or more.

According to the present disclosure, there is provided a polysilicon double package in which the above polysilicon package is sealed in an outer bag formed from a polyethylene-based resin film.

According to the present disclosure, there is further provided a process for producing a polysilicon package, comprising the steps of:

holding a bag formed from a polyethylene-based resin film having an average thickness of 300 $\mu$m or less in an upright state with a filling opening thereof facing up and the bottom thereof as a ground contact surface when crushed polysilicon are to be filled; and
filling the crushed polysilicon from the filling opening to ensure that the maximum expansion of the bag does not become 5 % or more.

In this production process, it is desired that the expansion of the bag at the time of filling the crushed polysilicon should be suppressed by inserting the bag into a frame to fill the crushed polysilicon.

Effect of the Invention

Since the thickness of the polyethylene-based resin film forming the bag of the polysilicon package is 300 $\mu$m or less, the deterioration of sealability due to insufficient heat-sealing is effectively avoided.

Although the above film is thin, the local expansion of the bag caused by filling the polysilicon (Si) chunks is restricted, thereby effectively avoiding the deterioration of the thrust strength of the film by the expansion of the bag, whereby damage to the bag at an excessively expanded local part is effectively prevented, and the contamination of the Si chunks caused by damage to the bag is avoided, thereby making it possible to keep the purity of the crushed polysilicon at a high level.

The polysilicon package produces the biggest effect when a bag made of linear low-density polyethylene (LLDPE) having high thrust strength and excellent pinhole resistance, especially metallocene-catalized LLDPE is used. Although the film made of such LLDPE has large expansion, the expansion of the bag caused by filling the Si chunks is restricted, whereby the pinhole resistance of LLDPE can be effectively utilized.

BRIEF DESCRIPTION OF THE DRAWINGS

Fig. 1(A) is a side view of a typical bag (flat bag) used in the polysilicon package;
Fig. 1(B) is a cross-sectional view cut on A-A';
Fig. 2(A) is a schematic side view of the polysilicon package in which Si chunks are filled in the bag;
Fig. 2 (B) is a schematic sectional view cut on B-B'; and
Fig. 3 is a schematic diagram showing a method of filling crushed polysilicon in the bag to obtain the polysilicon package .

BEST MODE FOR CARRYING OUT THE INVENTION

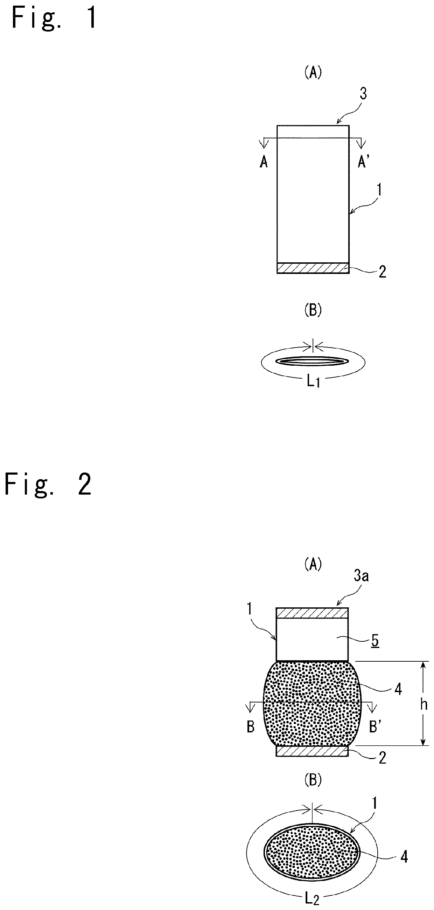

With reference to Figs. 1(A) and 1(B) which show a bag used in the polysilicon package, the bag represented by 1 as a whole has a heat-sealed bonded part 2 at the lower end when a polyethylene-based resin film is heat-sealed and a filling opening 3 for filling Si chunks in the bag 1 at the upper end.

The bag 1 shown in Figs. 1(A) and 1(B) is a so-called "flat bag" and produced, for example, by heat-sealing one side end (lower end) of a tube-like film formed by extrusion molding.

As a matter of course, the bag 1 may be shaped like a gusset bag in which a gusset is formed and a fold is formed in this gusset or formed by sealing in three directions so that a heat-sealed bonded part is formed at both side ends in addition to the above lower end (2).

It is preferred from the viewpoint of filling a large amount of Si chunks that the bag 1 should be shaped like a flat bag or a gusset bag.

The inner peripheral length of the cavity part of this bag 1 is represented by $L_1$ as shown in Fig. 1(B). In Fig. 1(B), $L_1$ is depicted like outer peripheral length in the drawing of the figure in Fig. 1(B) but represents the inner peripheral length.

In the present invention, the thickness of the polyethylene-based resin film forming the bag 1 needs to be 300 $\mu$m or less, preferably 250 $\mu$m or less. That is, when this film is too thick and the filling opening 3 of the above bag 1 is closed by heat-sealing, the sealability of the bag 1 may deteriorate due to unsatisfactory heat welding. When the bag 1 is filled with the Si chunks and the package obtained by heat-sealing the above opening 3 is packed in a transport case such as a cardboard box, the package becomes bulky, thereby impairing the packing property of this package.

When the polyethylene-based resin film is too thin, it may be difficult to adjust the expansion which will be described hereinafter to a predetermined range, or there may occur a problem such as the great reduction of the strength of the bag 1. Therefore, the thickness of the film is generally 100 $\mu$m or more, particularly preferably 120 $\mu$m or more.

In the present invention, the polyethylene-based resin forming the above film is not particularly limited if it can be molded into a film having the above thickness. Examples of the resin include low-density polyethylene (LDPE) having a density of less than 0.930 g/cm$^3$, high-density polyethylene (HDPE) having a density of 0.930 g/cm$^3$ or more and linear low-density polyethylene (LLDPE) having a density of 0.910 to 0.925 g/cm$^3$. A blend of these may be used as well. These polyethylenes which generally have an extrusion-grade MFR, for example, an MFR of 5 g/10 min (190°C) or less are used.

Further, the above polyethylene-based resin film has a thrust strength measured in accordance with JIS-Z1707 of 5 N or more, particularly preferably 7 N or more, at a thickness within the above range. Thereby, excellent pinhole resistance can be ensured.

To obtain a film having such high thrust strength with the above small thickness, the film is most preferably produced from linear low-density polyethylene (LLDPE), more specifically metallocene-catalized linear low-density polyethylene (metallocene-catalized LLDPE) obtained by polymerization using a metallocene-based catalyst.

That is, low-density polyethylene (LDPE) is obtained by polymerizing ethylene at a high pressure (about 1,000 to 4,000 atm) and a high temperature (about 100 to 350°C) by using a radical initiator as a catalyst and may also be called "high-pressure produced polyethylene". In LDPE obtained by this method, the ethylene chain includes a long-chain branch, thereby causing a reduction in density and flexibility due to this structure. In contrast to this, LLDPE is obtained by copolymerizing small amounts of $\alpha$-olefins (such as 1-butene, 1-hexene, 4-methylpentene-1 and 1-octene) with ethylene as a recurring unit and has a short branch randomly introduced thereinto, thereby causing a reduction in density. This LLDPE has a shorter branch and higher linearity of the molecule than LDPE. This LLDPE is excellent in impact resistance, pinhole resistance and sealability, and particularly LLDPE obtained by using a metallocene catalyst has a sharp molecular weight distribution, exhibits higher impact resistance, pinhole resistance and sealability and is therefore advantageous to the production of a film having high thrust strength and a film used to form a bag by heat-sealing.

Although the above LLDPE film, particularly metallocene-catalized LLDPE film is excellent in the above properties, it readily expands significantly. Therefore, when the bag 1 is produced from this film and the Si chunks are filled in the bag 1, the expansion of the bag 1 is large, thereby causing the deterioration of impact resistance and pinhole resistance due to thinning by expansion. However, since expansion at the time of filling the Si chunks is suppressed in the present invention, the characteristic properties of this LLDPE film are fully developed, thereby making it possible to effectively avoid damage to the bag caused by filling the Si chunks.

Further, in the present invention, it is desired from the viewpoint of preventing the contamination of the Si chunks filled in the bag 1 that the polyethylene-based resin forming the above film should have reduced contents of additives other than a resin component, such as fillers and antioxidants, especially metal compounds. It is particularly preferred that the resin should not be mixed with the above additives and that the film should be formed only from a resin component.

The Si chunks are filled in the bag 1 shown in Figs. 1(A) and 1(B) formed from the above polyethylene-based resin film through the filling opening 3.

After the Si chunks are filled in the bag 1, the polysilicon package having a form shown in Fig. 2(A) and Fig.

2(B) is obtained by closing the filling opening 3 by heat-sealing as required. In Fig. 2(A) and Fig. 2(B), a heat-sealed bonded part formed by closing the filling opening 3 by heat-sealing is represented by 3a, the Si chunks are represented by 4, and a head space (upper cavity) existent when the heat-sealed bonded part 3a is formed is represented by 5.

Although it is recommended to close the above filling opening 3 by heat-sealing, for example, when the unfilled part of the bag is very long, the bag can be sealed by folding this part.

With reference to Figs. 2 (A) and 2(B), in the polysilicon package, the crushed polysilicon 4 are filled to ensure that the maximum expansion of the bag 1 becomes 5 % or less, specifically 3 % or less when the bag 1 filled with the Si chunks 4 is held in an upright state, that is, the heat-sealed bonded part 2 becomes the bottom and the heat-sealed bonded part 3a becomes the upper end.

This maximum expansion is calculated from the following equation.

$$\texttt{Maximum expansion (\%) = ((L_2-L_1)/L_1) x 100}$$

In the above equation, $L_1$ denotes the inner peripheral length of the cavity part of the bag 1 when it is not filled with the Si chunks 4 (see Fig. 1(B)), and $L_2$ denotes the inner peripheral length of the bag 1 at a part showing the maximum expansion while the bag 1 is filled with the Si chunks 4 and the filling opening 3 is closed by heat-sealing to form the heat-sealed bonded part 3a (cross section B-B' in Fig. 2(B)).

That is, in the present invention, the maximum expansion falling within the above range means that the local expansion of the bag 1 caused by filling the Si chunks 4 is greatly restricted with the result that the deterioration of characteristic properties such as thrust strength caused by the expansion of this bag 1 (polyethylene-based resin film) is effectively avoided, thereby effectively preventing damage to the bag caused by this expansion.

Although the size of the Si chunks 4 to be filled in the bag 1 is not particularly limited in the present invention, when Si chunks 4 having an average maximum length of 5 to 150 mm, specifically 30 to 110 mm, are filled, the present invention becomes most effective.

That is, when the Si chunks 4 as big as above are filled in the bag 1, along with the loading of the Si chunks 4, stress is applied outward to the bag 1. As Si chunks 4 are further filled, Si chunks 4 filled later are pressed into spaces between Si chunks filled and loaded before, whereby the bag 1 is spread out and expanded. This expansion deteriorates thrust strength and pinhole resistance, and a sharp edge of a Si chunk 4 tends to thrust the bag 1 by vibration at the time of filling or transport, thereby causing damage to the bag 1. Then, since this expansion at the time of filling is effectively suppressed in the present invention, the deterioration of characteristic properties caused by the expansion of the bag 1 can be effectively avoided, and damage caused by this expansion can be effectively prevented.

Meanwhile, the Si chunks 4 are obtained by crushing a polysilicon rod produced by the Siemens process mechanically, and chunks having a size larger than the above range are existent. Large Si chunks 4 are often packaged individually in most cases. In this case, as damage caused by the expansion of the bag 1 (polyethylene-based resin film) can be ignored, there is no point in applying the present invention.

When the Si chunks 4 are very small, for example, the average maximum length thereof is smaller than the above range, as the Si chunks 4 are densely filled in the bag 1, the amount of Si chunks 4 pressed into spaces between the loaded Si chunks 4 filled before is small and expansion caused by filling the subsequent Si chunks is relatively small. Further, since pressure is uniformly applied to the inner surface of the bag 1, local expansion hardly occurs. Therefore, damage to the bag 1 caused by filling the Si chunks 4 hardly occurs as well.

Thus, the polysilicon package produces the most excellent effect when it is filled with the Si chunks 4 having an average maximum length within the above range.

Further, in the polysilicon package , it is desired that the ratio ($h/L_1$) of the loading height "h" of the Si chunks filled in the bag 1 to the inner peripheral length "$L_1$" of the bag 1 before the Si chunks 4 are filled should be set to 0.1 or more.

That is, by setting the inner peripheral length "$L_1$" of the bag 1 to a large value and the height of the bag 1 to a small value so that the above ratio ($h/L_1$) becomes low, the maximum expansion of the bag 1 can be set to the above range. However, setting the inner peripheral length "$L_1$" of the bag 1 to a large value means that the installation space of this package becomes larger than necessary, thereby causing such inconvenience that a larger storage place than necessary is required. As a matter of course, this inconvenience can be avoided by piling up a large number of packages. However, piling up a large number of packages tends to cause damage to the bag 1.

Therefore, in the present invention, it is preferred to set the ratio ($h/L_1$) to the above range.

In the present invention, most preferably, the heat-sealed bonded part 3a is formed by closing the filling opening 3 at the upper end by heat-sealing. In this case, the head space 5 is generally existent between the top surface of the Si chunks 4 filled in the bag 1 and the heat-sealed bonded part 3a. When the ratio ($h/L_1$) is set to the above range, the height of this head space accounts for 20 to 90 % of the total height up to the heat-sealed bonded part 3a of the bag 1.

In the polysilicon package, the inner peripheral length $L_1$ of the bag 1 before the Si chunks 3 are filled can be easily obtained, for example, by cutting out the head space 5 close to the heat-sealed bonded part 3a at the upper end and measuring the inner peripheral length of this part. This is because there is substantially no expansion of the polyethylene-based resin film forming the bag 1 in this part. For the same reason, the thrust strength of the polyethylene-based resin film used to form this package can be obtained by cutting out this part and measuring the thrust strength.

Further, in the present invention, to set the maximum expansion of the bag 1 filled with the Si chunks 4 to the above range, the amount of the Si chunks 4 to be filled and the size of the bag 1 are set to suitable ranges to ensure that the above ratio ($h/L_1$) falls within the above range and the Si chunks 4 are filled to ensure that the expansion of the bag 1 is restricted.

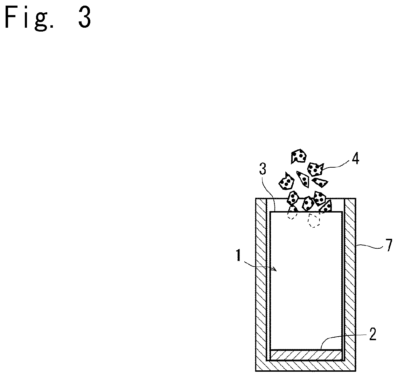

Stated more specifically, as shown in Fig. 3, while the empty bag 1 before the Si chunks 4 are filled is stored in a frame having an inner peripheral length which is larger than the outer peripheral length of the empty bag and less than 5 %(sic) of the outer peripheral length of the empty bag and held in an upright state, the Si chunks 4 should be filled. That is, as excessive deformation caused by filling the Si chunks 4 is suppressed by the frame 7, pressing Si chunks 4 filled later into spaces between the loaded Si chunks filled before is effectively avoided, thereby making it possible to suppress the local expansion of the bag 1 and to set the maximum expansion to the above range.

The frame 7 has a container-like form having an opening at the top in Fig. 3 and may be shaped like a cylinder, and may be mounted on a suitable base.

The inner diameter of the above frame 7 should be a size close to the outer peripheral length of the empty bag 1, for example, the same size as or 1.05 times or less, specifically 1.03 times or less larger than the outer peripheral length of the empty bag 1 in order to prevent deformation caused by filling the Si chunks 4.

Further, the frame 7 should have such stiffness that deformation caused by filling the Si chunks 4 can be suppressed and is preferably made of a synthetic resin in order to prevent the metal contamination of the Si chunks by accidental contact with the Si chunks 4.

The frame 7 is made of polyolefin resin such as polyethylene-based resin or polypropylene-based resin, polyurethane resin, acrylonitrile-butadiene-styrene resin, polyvinyl chloride resin, polycarbonate resin or Teflon (trade name) and has a thickness of 1 mm or more, preferably 1.5 mm or more, more preferably 2 mm or more, to ensure appropriate stiffness.

To prevent the metal contamination of the Si chunks 4, the above synthetic resin is preferably not mixed with additives other than a resin component.

Preferably, the above frame 7 can be opened on the side by hinge attachment in order to enable the bag 1 filled with the Si chunks 4 to be taken out therefrom easily.

After the Si chunks are filled in the bag 1 as described above, the bag 1 filled with the Si chunks is taken out from this frame 7 and the filling opening 3 is heat-sealed to obtain the polysilicon package.

In this case, the height of the frame 7 may be set to a size that the filling opening 3 is exposed therefrom so that heat-sealing can be carried out while the bag 1 is stored in the frame 7.

In the polysilicon package obtained as described above, the expansion of the bag at the time of filling the Si chunks 4 is suppressed effectively. After the Si chunks 4 are filled to ensure that expansion is suppressed, the mobility of the Si chunks 4 in the bag 1 is low and accordingly the expansion of the bag 1 is hardly caused by the own weight of the Si chunks 4 in the bag 1. Therefore, by suppressing the maximum expansion at the time of filling the Si chunks 4 as described above, damage to the bag can be prevented and the high purity of the Si chunks 4 can be kept at the time of filling the Si chunks 4 and also at the time of storing and transporting the package after that.

The polysilicon package may be used as a double structure.

That is, the above-described polysilicon package is used as an inner bag and stored in an outer bag to obtain a double package.

In this double package, the outer bag may be formed from the same polyethylene resin film as that of the inner bag (polysilicon package). It is particularly preferred that the polyethylene-based resin film of the inner bag and the polyethylene-based resin film of the outer bag should be slippery over each other.

For example, by selecting the type of the polyethylene-based resin to ensure that the coefficient of static friction (JIS-K7125) between these films becomes 0.5 or less, even when the edge of a Si chunk 4 breaks through the inner bag, this force is hardly transmitted to the outer bag directly, thereby making it possible to effectively prevent damage to the outer bag.

To ensure such high slippage, metallocene-catalized LLDPE is preferably used as a film for the inner bag (polysilicon package) and a film for the outer bag.

Further, in the above double package, the total of the average thicknesses of the outer bag and the inner bag is preferably 500 $\mu$m or less to prevent the bulkiness of the package at the time of transport. In the above embodiment, the average thickness of each of the bags is preferably more than 100 $\mu$m and 300 $\mu$m or less.

EXAMPLES

The following examples are provided for the purpose of further illustrating the present invention but are in no way to be taken as limiting.

In the examples, the breakage rate of the package was a value measured by the following method. breakage rate (%) of package;

40 polysilicon packages produced by heat-sealing the filling openings of bags filled with Si chunks by a predetermined method were packed in fives in cardboard boxes, the cardboard boxes were loaded on a truck while a buffer material was inserted into spaces in the cardboard boxes, the Si chunks were taken out by cutting heat-sealed bonded parts at the filling openings of the packages after driving 200 km over an open road, water was injected into the bags from the cut parts, bags having holes from which water was blown out were regarded as broken bags, and the proportion of broken bags in 40 packages was taken as the breakage rate (%) of the packages.

This experiment was carried out 3 times to obtain an average breakage rate (%).

<Examples 1 and 2>

A metallocene-catalized LLDPE film having a thrust strength (JIS-Z1707) and an average thickness shown in Table 1 was prepared to produce a bag (flat bag or gusset bag) having an inner peripheral length $L_1$ and a length (height) shown in Table 1 therefrom. MFR (190°C) of the metallocene-catalized LLDPE used to produce the film was 2 g/10 min.

The outer peripheral length of the bag was substantially the same as the inner peripheral length $L_1$ in the flat bag and the gusset bag.

A frame (inner peripheral length of 956 mm) was prepared by using a polyethylene plate-like material having a thickness of 5 mm, the above bag was placed in this frame, 10 kg of Si chunks having an average maximum length shown in Table 1 was filled in the bag manually, and the filling opening of this bag was heat-sealed.

The average breakage rate of the obtained packages was measured, and the measurement results are shown.

The maximum outer peripheral length of each package used in the measurement experiment of the breakage rate was measured and taken as maximum inner peripheral length $L_2$ to calculate the maximum expansion shown in Table 1.

Further, Table 1 also shows the average head space proportion measured for each bag and the average value of the ratio ($h/L_1$) of the loading height "h" of the Si chunks to the inner peripheral length "$L_1$"

<Comparative Example 1>

A package was manufactured and measured in the same manner as in Example 1 except that Si chunks were filled in the bag without using the frame. The results are shown in Table 1.

[Table 1]

Table 1

|  |  | Example 1 | Example 2 | Comp. Ex. 1 |
|---|---|---|---|---|
| Bag | Size: $L_1$ x height (mm) | 920 x 500 | 920 x 500 | 920 x 500 |
|  | Bag form | flat bag | gusset bag | flat bag |
|  | Film material | metallocene-catalized LLDPE | metallocene-catalized LLDPE | metallocene-catalized LLDPE |
|  | Average thickness of film ($\mu$m) | 180 $\pm$ 2 | 180 $\pm$ 2 | 180 $\pm$ 2 |
|  | Thrust strength of film (N) | 10.3 | 10.3 | 10.3 |
| Si chunks | Average maximum length | 74 | 77 | 76 |
|  | Amount (Kg) | 10 | 10 | 10 |
| Frame | Inner peripheral length (mm) | 956 | 956 | no frame |

(continued)

|  | | | Example 1 | Example 2 | Comp. Ex. 1 |
|---|---|---|---|---|---|
| Package | Ratio ($h/L_1$) | | 0.22 | 0.22 | 0.16 |
| | Head space proportion (%) | | 48 | 47 | 62 |
| | Maximum peripheral length : $L_2$ (mm) | Maximum | 945 | 941 | 979 |
| | | Minimum | 931 | 926 | 969 |
| | Maximum expansion (%) | | 1.2 ~ 2.72 | 0.65 ~ 2.28 | 5.33 ~ 6.41 |
| | Average breakage rate (%) | | 5 | 4 | 14 |

Explanation of symbols

1:    bag
2:    heat-sealed bonded part at lower end
3     filling opening
3a:   heat-sealed bonded part of filling opening
4:    crushed polysilicon
5     head space
7     frame

**Claims**

1. A process for producing a polysilicon package, comprising steps of:

   holding a bag (1) formed from a linear low-density polyethylene-based resin film having an average thickness of 300 $\mu$m or less in an upright state with a filling opening (3) thereof facing up and a bottom (2) of the bag (1) in contact with the ground when crushed polysilicon are to be filled;
   and filling crushed polysilicon (4) from the filling opening (3) to ensure that a maximum expansion of the bag does not become 5 % or more, wherein

$$\text{the maximum expansion (\%)} = ((L2-L1)/L1) \times 100$$

   wherein L1 denotes the inner peripheral length of the cavity part of the bag (1) when it is not filled with crushed polysilicon (4), and L2 denotes the inner peripheral length of the bag (1) at a part showing the maximum expansion while the bag (1) is filled with crushed polysilicon (4) and the filling opening (3) is closed by heat-sealing to form a heat-sealed bonded part (3a),
   wherein the expansion of the bag (1) to be filled with the crushed polysilicon (4) is suppressed by inserting the bag (1) into a frame (7) to fill the crushed polysilicon (4).

2. The process for producing a polysilicon package according to claim 1, wherein the bag (1) has the heat-sealed bonded part (3a) at a top opposite to the bottom (2), and the heat-sealed bonded part (3a) at the top is formed by closing after filling crushed polysilicon (4).

3. The process for producing a polysilicon package according to claim 2, wherein a ratio ($h/L_1$) of a loading height "h" of the crushed polysilicon (4) filled in the bag (1) to inner peripheral length "$L_1$" of the bag (1) before the crushed polysilicon (4) are filled is 0.1 to more.

4. The process for producing a polysilicon package according to claim 1, wherein average of maximum length of the crushed polysilicon (4) is 5 to 150 mm.

**EP 3 199 472 B1**

**5.** The process for producing a polysilicon package according to claim 1, wherein the linear low-density polyethylene-based resin film forming the bag (1) has a thrust strength (JIS-Z1707) of 5 N or more.

**6.** The process for producing a polysilicon package according to claim 1, wherein the bag (1) is sealed in an outer bag formed from polyethylene-based resin film.

**Patentansprüche**

**1.** Verfahren zum Herstellen eines Polysiliziumpakets, das die folgenden Schritte umfasst:

Halten eines Beutels (1), der aus einem Harzfilm aus linearem Polyethylen niedriger Dichte mit einer durchschnittlichen Dicke von 300 μm oder weniger gebildet ist, in einem aufgerichteten Zustand, wobei eine Füllöffnung (3) davon nach oben gewandt ist und einer Unterseite (2) des Beutels (1) in Kontakt mit dem Boden ist, wenn zerkleinertes Polysilizium eingefüllt werden soll;
und Einfüllen von zerkleinertem Polysilizium (4) von der Füllöffnung (3), um sicherzustellen, dass eine maximale Ausdehnung des Beutels nicht 5 % oder mehr wird, wobei

$$\text{die maximale Ausdehnung (\%)} = ((L2\text{-}L1)/L1) \times 100$$

wobei L1 die Innenumfangslänge des Hohlraumteils des Beutels (1) anzeigt, wenn er nicht mit zerkleinertem Polysilizium (4) gefüllt ist, und L2 die Innenumfangslänge des Beutels (1) an einem Teil anzeigt, der die maximale Ausdehnung zeigt, während der Beutel (1) mit zerkleinertem Polysilizium (4) gefüllt ist, und die Füllöffnung (3) durch Heißsiegeln verschlossen ist, um einen heißversiegelten verbundenen Teil (3a) zu bilden,
wobei die Ausdehnung des Beutels (1), der mit dem verkleinerten Polysilizium (4) gefüllt werden soll, durch Einführen des Beutels (1) in einen Rahmen (7) unterdrückt wird, um das zerkleinerte Polysilizium (4) einzufüllen.

**2.** Verfahren zum Herstellen eines Polysiliziumpakets nach Anspruch 1, wobei der Beutel (1) einen heißversiegelten verbundenen Teil (3a) an einer Oberseite der Unterseite (2) entgegengesetzt hat, und der heißversiegelte verbundene Teil (3a) an der Oberseite durch Verschließen nach dem Einfüllen des zerkleinerten Polysiliziums (4) gebildet ist.

**3.** Verfahren zum Herstellen eines Polysiliziumpakets nach Anspruch 2, wobei ein Verhältnis (h/$L_1$) einer Ladehöhe "h" des zerkleinerten Polysiliziums (4), das in den Beutel (1) eingefüllt ist, zu Innenumfangslänge "$L_1$" des Beutels (1) bevor das zerkleinerte Polysilizium (4) eingefüllt ist, 0,1 bis mehr ist.

**4.** Verfahren zum Herstellen eines Polysiliziumpakets nach Anspruch 1, wobei ein Durchschnitt der Maximallänge des zerkleinerten Polysiliziums (4) 5 bis 150 mm ist.

**5.** Verfahren zum Herstellen eines Polysiliziumpakets nach Anspruch 1, wobei der Harzfilm aus linearem Polyethylen niedriger Dichte, der den Beutel (1) bildet, eine Schubkraft (JIS-Z1707) von 5 N oder mehr hat.

**6.** Verfahren zum Herstellen eines Polysiliziumpakets nach Anspruch 1, wobei der Beutel (1) in einem äußeren Beutel abgedichtet ist, der aus Harzfilm aus Polyethylen gebildet ist.

**Revendications**

**1.** Procédé de production d'un paquet de polysilicium, comprenant les étapes suivantes :

le maintien d'un sac (1) formé à partir d'un film de résine à base de polyéthylène basse densité linéaire ayant une épaisseur moyenne de 300 μm ou moins à un état vertical avec une ouverture de remplissage (3) de celui-ci orientée vers le haut et un fond (2) du sac (1) en contact avec le sol lorsqu'il doit être rempli avec du polysilicium broyé ;
et le remplissage de polysilicium broyé (4) par l'ouverture de remplissage (3) afin de s'assurer qu'une expansion maximale du sac ne devient pas de 5 % ou plus, avec

$$\text{l'expansion maximale (\%)} = ((L2\text{-}L1)/L1) \times 100,$$

L1 désignant la longueur périphérique intérieure de la partie de cavité du sac (1) lorsqu'il n'est pas rempli avec du polysilicium broyé (4), et L2 désignant la longueur périphérique intérieure du sac (1) au niveau d'une partie montrant l'expansion maximale pendant que le sac (1) est rempli avec du polysilicium broyé (4), et l'ouverture de remplissage (3) étant fermée par scellement thermique pour former une partie liée thermosoudée (3a), dans lequel l'expansion du sac (1) à remplir avec le polysilicium broyé (4) est supprimée par insertion du sac (1) dans un cadre (7) pour le remplir avec le polysilicium broyé (4).

2.  Procédé de production d'un paquet de polysilicium selon la revendication 1, dans lequel le sac (1) comprend une partie liée thermosoudée (3a) au niveau d'une partie supérieure opposée au fond (2), et la partie liée thermosoudée (3a) au niveau de la partie supérieure est formée par fermeture après le remplissage avec le polysilicium broyé (4).

3.  Procédé de production d'un paquet de polysilicium selon la revendication 2, dans lequel un rapport $(h/L_1)$ entre une hauteur de chargement "h" du polysilicium broyé (4) avec lequel le sac est rempli (1) et la longueur périphérique intérieure "$L_1$" du sac (1) avant son remplissage avec le polysilicium broyé (4) est de 0,1 ou plus.

4.  Procédé de production d'un paquet de polysilicium selon la revendication 1, dans lequel la moyenne de la longueur maximale du polysilicium broyé (4) est de 5 à 150 mm.

5.  Procédé de production d'un paquet de polysilicium selon la revendication 1, dans lequel le film de résine à base de polyéthylène basse densité linéaire formant le sac (1) présente une résistance à la poussée (JIS-Z1707) de 5 N ou plus.

6.  Procédé de production d'un paquet de polysilicium selon la revendication 1, dans lequel le sac (1) est scellé dans un sac extérieur formé à partir d'un film de résine à base de polyéthylène.

Fig. 1

(A)

A — A'

3

1

2

(B)

L₁

Fig. 2

(A)

3a

1

5

4

h

B — B'

2

(B)

1

4

L₂

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102012206251 A1

- DE 2561015